Europäisches Patentamt

(19) European Patent Office (11) Publication number: **0 253 044**
**B1**
Office européen des brevets

(12) EUROPEAN PATENT SPECIFICATION

(45) Date of publication of the patent specification: (51) Int. Cl.⁵: **F16F 1/12**, F16K 31/12,
**19.09.90** F15B 13/00

(21) Application number: **86830297.7**

(22) Date of filing: **16.10.86**

(54) A precompressed spring structure.

(30) Priority: **08.07.86 IT 2106886** (73) Proprietor: **Trevisan, Giovanni, Via Edison, 233,**
**I-20019 Settimo Milanese Milano(IT)**

(43) Date of publication of application:
**20.01.88 Bulletin 88/3** (72) Inventor: **Trevisan, Giovanni, Via Edison, 233,**
**I-20019 Settimo Milanese Milano(IT)**

(45) Publication of the grant of the patent:
**19.09.90 Bulletin 90/38** (74) Representative: **Cicogna, Franco, Ufficio Internazionale**
**Brevetti Dott.Prof. Franco Cicogna Via Visconti di**
**Modrone, 14/A, I-20122 Milano(IT)**

(84) Designated Contracting States:
**AT BE CH DE ES FR GB LI NL SE**

(56) References cited:
**EP-A- 0 091 010**
**GB-A- 2 095 365**
**GB-A- 2 095 366**
**US-A- 4 118 020**

ACTORUM AG

## Description

The present invention relates to a precompressed spring structure, and particularly to a structure which is especially suitable for use in a single acting rotary pneumatic actuator.

In such single acting rotary pneumatic actuators, which are used for the actuation of ball valves, butterfly valves and in general wherever there is the need for generating a rotary movement of less than a full revolution, the return movement of the actuator is obtained by means of return springs which act on the piston of the actuator which causes the forward movement thereof under the action of a fluid under pressure.

One known type of rotary actuator has a linearly reciprocable piston having a toothed rack meshing with a pinion on an actuator shaft which is thus caused to turn through a partial revolution upon linear movement of the piston. Return movement of the piston is achieved by means of a compression spring fitted in the actuator body between the piston and a removable end cap of the actuator. In the extended position such a spring has a significant natural length in order to be able to exercise, during the return stroke of the piston, the required force to exert the necessary torsional couple on the actuator shaft, and even when at the end of its working stroke the spring is still held under a certain compression. In some actuators there may be several such springs acting on one or more pistons.

The natural length of the or each spring, when at the end of its working stroke, is always greater than the length of the housing within which it is mounted within the actuator, so that there is always a preload on the springs. Obviously, the larger the torsional couple to be exerted by the actuator the greater the pre-load it is necessary to give to the spring, and the greater must be its natural length with respect to the length of the housing.

Taking account of the fact that the pre-load of the springs used in actuators can reach values of several thousands of kilogrammes, it will be immediately seen that their assembly and dismantling requires special equipment and significant safety precautions. In particular, if it is necessary to effect maintenance of a single-acting rotary actuator, or to vary the number of return springs to obtain a different torsional couple when remote from the factory or service workshop, one is confronted with a rather complicated job and one which in many cases is dangerous. In fact, usually, at the location of the installation in which the actuator is fitted there is no suitable equipment or specialised personnel for this task, and any attempt to dismantle the actuator merely by removing the screws which connect the head to the body of the actuator can involve significant risks in that the head could be violently thrust by the pre-load of the spring or springs.

Because of this the maintenance and dismantling of actuators are for safety reasons generally carried out in factories, which means that the actuator has to be sent back to the factory every time for the normal maintenance work, with consequent stopping of the installation on which it is fitted.

The document US-A-A 118 020 disclcses a precompressed spring structure, comprising a helical spring body having means operable to limit the elongation of the spring body to a value less than its natural length and slightly greater than the intended elongation in use. The limiting means including spring cups engaging respective ends of the spring body. Each end cup receives a hollow pin, each pin extending axially inwardly therefrom and abutting the other pin. The pins include axially aligned threaded throughbores which receive a threaded stud whereby the pins are maintained in abutting relation. The spring assembly is assembled by means of assembly tools which serve to rotate the pins to allow the stud to be received therein and to space the stud within the pins.

The technical problem which the present invention seeks to solve is that of eliminating the previously listed disadvantages by providing a precompressed spring appropriately designed for single acting rotary pneumatic actuators, which gives the possibility of having a desired value of pre-load on the spring or springs, even with the piston at the end of its return stroke, without, however, being faced with a dangerous situation if it must be dismantled for mainteance.

According to the present invention, there is provided a precompressed spring structure, suitable for a single-acting pneumatic rotary actuator, having the features of the characterising part of claim 1.

One advantage of the precompressed spring structure of the invention is that it can be installed easily within the actuator body, without requiring complex or dangerous operations, thus offering the possibility of effecting, directly at the point of installation, all the operations connected with the maintenance and dismantling of the actuators.

Another advantage of the present invention is that it provides a precompressed spring which although it finds its main application in the field of semi-rotating actuators, can nevertheless easily be utilised in all those other fields in which there is the necessity of having precompressed springs, which can be installed easily and rapidly.

Thanks to the present invention there is now available a precompressed spring structure, particularly designed for semi-rotating actuators, which is easily obtainable starting from elements and materials which are commonly available on the market and, therefore, which is competitive from an economic point of view.

One embodiment of the present invention will now be more particularly described, by way of example, with reference to the accompanying drawings, in which:

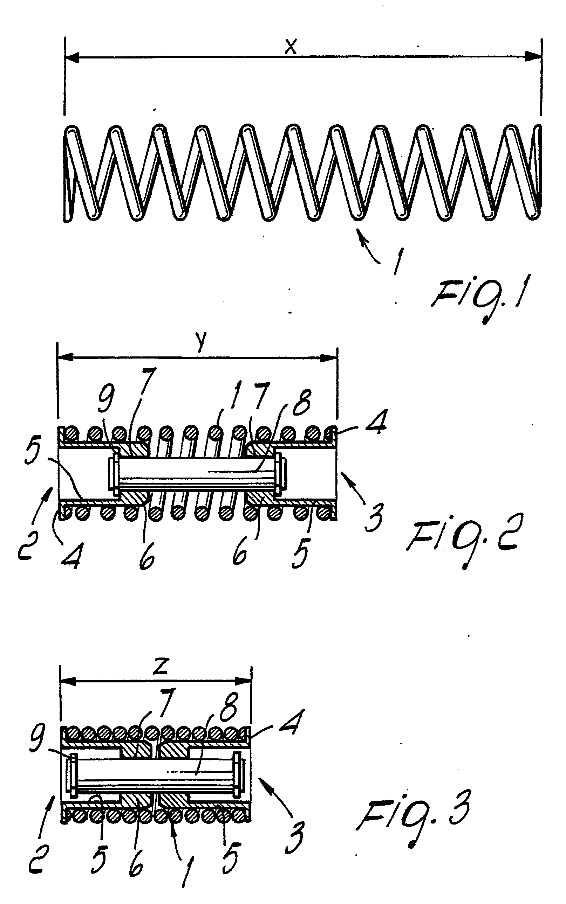

Figure 1 is a schematic side view of a coil spring in an extended position;

Figure 2 is an axial section showing the spring of Figure 1 to which have been fitted means for limiting its elongation, in the position of maximum elongation;

Figure 3 is an axial section schematically illustrating the pre-compressed spring in the completely compressed condition, corresponding to the minimum length which the spring can assume;

Figures 4 and 5 are schematic sectional views through a single-acting pneumatic rotary actuator respectively in the actuated condition with the springs completely compressed and in the released condition with the springs extended, that is to say at the end of the return stroke; and

Figure 6 is a schematic sectional view of the actuator of Figures 4 and 5 in which precompressed springs according to the invention have been fitted.

Referring now to the drawings, the precompressed spring structure of the invention comprises a coil spring generally indicated with the reference numeral 1, which, in its relaxed state, has a natural length x which is a direct function of the resilient thrust which it is desired to make the spring assume in the compressed position. In Figure 2 the spring 1 is shown precompressed by means serving to limit the elongation of the spring 1 to a value y less than its natural length but greater than the maximum elongation intended in use, in such a way that the spring always maintains a pre-load value.

In the preferred embodiment illustrated, which, however, is not intended to be limiting, the said limiting means are constituted by a first and a second end cup, respectively indicated with the reference numerals 2 and 3, each of which has a radially outward peripheral flange around the lip and is fitted into the corresponding end of the spring which engages against the flange. The bottom wall of each spring cup 2,3 is identified with the reference numeral 6 and is provided with a through hole 7 in which is slidable a pin 8 provided, at each end, with a circlip 9 which prevents the spring cups 2,3 from coming off the pin itself. The depth of each spring cup 2,3 is such that even when the spring 1 is fully compressed the ends of the pin 8 do not project out from the cups 2,3. On the other hand when released, the spring 1 as indicated in Figure 2, is always held by the end cups 2,3, engaged against the circlips 9 to form a spring of length close to, but slightly greater than, the maximum length which the spring will be held to in use.

Each of the end cups 2 and 3 has, in an axial direction, a length slightly less than half the length of the spring when fully compressed, as is schematically illustrated in Figure 3. Likewise, the pin 8 has an axial length which is less than the minimum length which the spring 1 can assume when compressed.

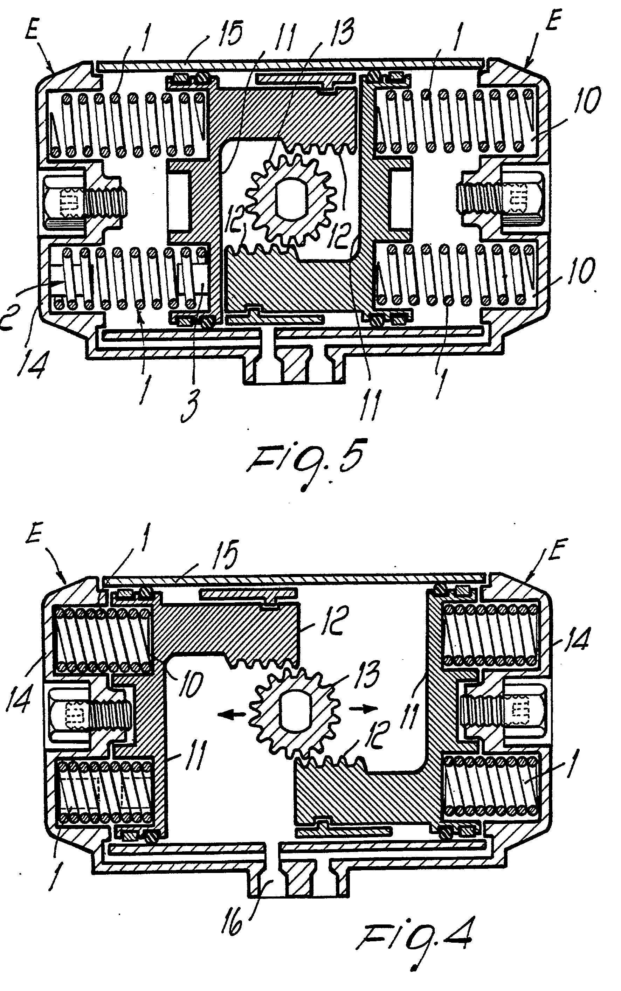

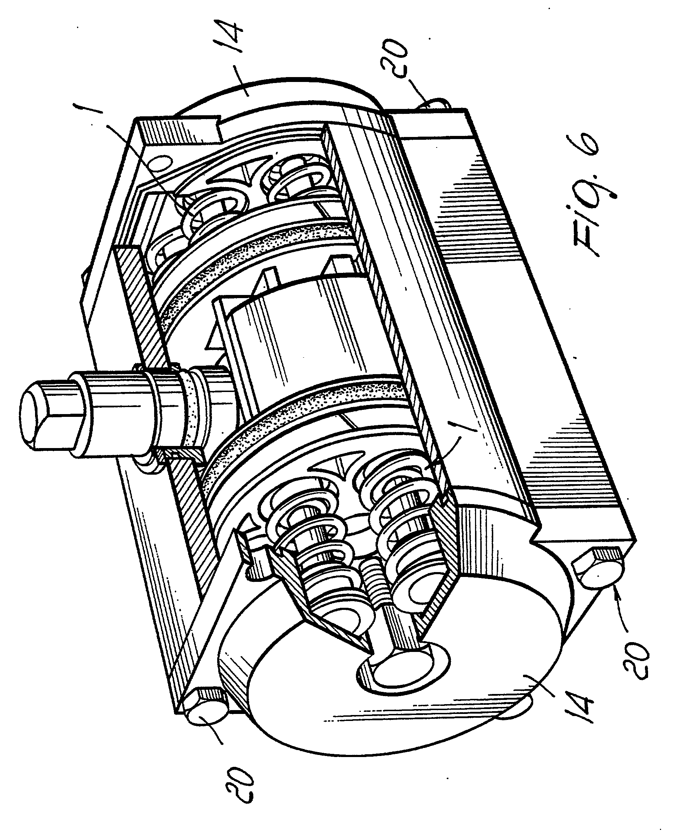

Referring now to Figures 4 to 6, which show the precompressed springs fitted in a single-acting pneumatic rotary actuator. In fact, there are shown a plurality of precompressed springs 1 housed in a chamber 10 between the crowns of respective pistons 11, each of which has a toothed rack portion 12 meshing with a central pinion 13, and the end cup 14 of the body 15 of the actuator. As illustrated in Figure 4, during the forward stroke of the actuator, effected by introducing a pneumatic fluid through an inlet 16, the pistons 11 slide towards the ends of the actuator, compressing the springs. In the return stroke, the energy stored in the springs causes the return stroke, with the desired torsional couple, which is a function of the pre-load. If it becomes necessary to dismantle the actuator, there are no particular risks in that the above-described limiting means maintain the maximum length which the spring can assume at a value no greater than about one or two millimetres more than the maximum length in use, at the same time guaranteeing the pre-load.

Thus, upon removing the end cups 14 by unscrewing bolts 20 (see Figure 6) it will be seen that after having unscrewed for a short section, the springs no longer extend, being held by the limiting means and thus do not constitute dangerous elements in the dismantling stage.

Moreoever, to what has been said it can be added that the limiting means housed axially within the spring body for about two-thirds of its length, ensure that this does not deflect from its axis during compression, thus contributing to an improvement in the operation of the spring itself.

## Claims

1. A precompressed spring structure, suitable for a single-acting pneumatic rotary actuator, comprising a helical spring body (1) having means (2, 3, 4, 8) operable to limit the elongation of the spring body to a value less than its natural length and slightly greater than the intended elongation in use, said limiting means including spring cups (2, 3) engaging respective ends of the spring body, characterized in that said limiting means are carried slidably on a central pin (8), the limiting means comprising limiting circlips (9) engaged in annular grooves at the ends of said pin (8).

2. A precompressed spring structure according to claim 1, characterized in that each of said cups (2, 3) has an axial length equal to or less than one half of the axial length of the spring body (1) when fully compressed.

3. A precompressed spring structure according to claim 1, characterized in that the pin (8) has an axial length less than or equal to he axial length of the spring body (1) when fully compressed.

## Patentansprüche

1. Einheit mit Feder unter Vorspannung, die auf eine einfachwirkend pneumatische Drehbetätigungsvorrichtung angebracht werden kann, und einen Spiralfederkörper (1) versehn, der mit Mitteln (2, 3, 4, 8) vorgesehen ist, die zum Abgrenzen der Federkörperverlängerung bis zum einen kleinere Wert als die Normallänge und ein wenig grössere als die gewünschte Gebrauchslänge wirken, wobei diese Abgrenzungsmitteln Federteller (2, 3) einschliessen, die in die entsprechenden Federkörperenden eingreifen, dadurch gekennzeichnet, dass die obengenannten Abgrenzungsmittel gleitend auf einen Mittelstift (8) getragen sind, wobei dieselben Abgrenzungsmittel (9) auf den Enden des obengenannten Stiftes (8) mit ringförmigen Rillen eingreifen.

2. Einheit mit Feder unter Vorspannung nach Anspruch 1, dadurch gekennzeichnet, dass jeder Teller eine axiale Länge verseht, die gleich oder kleiner als eine axiale Halblänge des Federkörpers (1) ist, als dieser unter ganzer Vorspannung bleibt.

3. Einheit mit Feder unter Vorspannung nach Anspruch 1, dadurch gekennzeichnet, dass der Stift (8) eine axialen Länge verseht, die kleiner oder gleich der axialen Länge des Federkörpers (1) ist, als dieser unter ganzer Vorspannung bleibt.

## Revendications

1. Structure à ressort précomprimé, apte à être appliqué à un activateur rotatif pneumatique à simple effet, comprenant un corps (1) de ressort hélicoïdal présentant moyens (2, 3, 4, 8) pouvant être opérés pour limiter l'élongation du corps du ressort jusqu'une valeur plus petite que sa longueur naturelle et peu plus grande que l'extension désirée pendant l'emploi, lesdits moyens de limitation comprenant tasses (2, 3) de ressort engageant les extrémités respectives du corps du ressort, caractérisée en ce que lesdits moyens de limitation sont portés coulissants sur un tourillon central (8), les moyens de limitation comprenant anneaux ressort de limitation (9) engagés dans rainures annulaires aux extrémités dudit tourillon (8).

2. Structure à ressort précomprimé selon la revendication 1, caractérisée en ce que chaque tasse (2, 3) présente une longueur axiale égale ou bien plus petite qu'une moitié de la longueur axiale du corps du ressort (1), lorsqu'il est comprimé du tout.

3. Structure à ressort précomprimé selon la revendication 1, caractérisée en ce que le tourillon (8) présente une longueur axiale plus petite ou bien égale à la longueur axiale du corps (1) du ressort lorsqu'il est comprimé du tout.

X

Fig. 1

y

Fig. 2

Z

Fig. 3

Fig.5

Fig.4

Fig. 6

EP 0 253 044 B1